# EUROPEAN PATENT APPLICATION

(11) **EP 4 410 619 A1**
(43) Date of publication of application: **07.08.2024**
(21) Application number: 22876386.8
(22) Date of filing: 28.09.2022
(51) Int. Cl.: B60W 30/06

(54) **GARAGE-EXIT ASSISTANCE SYSTEM**

(30) Priority: 29.09.2021 JP 2021159566
(71) Applicant: AISIN CORPORATION, Kariya-shi, Aichi 448-8650 (JP)
(72) Inventor: KIYOKAWA, Yusuke, Tokyo 103-0022 (JP)
(74) Representative: TBK
(86) International application number: PCT/JP2022/036279
(87) International publication number: WO 2023/054520

(57) **Abstract**

A parking-slot-exit assist system includes: an estimation unit configured to estimate a passage angle indicating an angle formed by a longitudinal direction of a parking area and an extending direction of a passage, on the basis of pre-parking information that is acquired before a start of a parking operation of parking a vehicle from the passage to the parking area and is used for estimating the extending direction of the passage, and on the basis of a post-parking vehicle direction that indicates an orientation of the vehicle after completion of parking and is used for estimating the longitudinal direction of the parking area; and a setting unit configured to set a parking-slot-exit target position of the vehicle on the basis of the passage angle.

## Description

### TECHNICAL FIELD

The present invention relates to a parking-slot-exit assist system.

### BACKGROUND ART

In recent years, in a system for assisting traveling of a vehicle, a technology for assisting a parking-slot-exit operation of causing the vehicle to exit from a parking area to a passage has been used.

### CITATIONS LIST

### PATENT LITERATURE

Patent Literature 1: JP 2018-36859 A

### SUMMARY OF INVENTION

### TECHNICAL PROBLEMS

In assisting the parking-slot-exit operation in a side-by-side parking lot, when control is performed without consideration of an angle (a passage angle) formed by a longitudinal direction of the parking area and an extending direction of the passage, a moving path is not appropriately generated in the parking-slot-exit operation, and a behavior of the vehicle may become unstable.

Therefore, the present invention is to provide a parking-slot-exit assist system capable of realizing highly accurate parking-slot-exit assist in a side-by-side parking lot.

### SOLUTIONS TO PROBLEMS

An embodiment of the present invention is a parking-slot-exit assist system that assists a parking-slot-exit operation of causing a vehicle to exit a parking area to a passage, the parking-slot-exit assist system including: an estimation unit configured to estimate a passage angle indicating an angle formed by a longitudinal direction of the parking area and an extending direction of the passage, on the basis of pre-parking information that is acquired before completion of a parking operation of parking the vehicle from the passage to the parking area and is used for estimating the extending direction of the passage, and on the basis of a post-parking vehicle direction that indicates an orientation of the vehicle after completion of parking and is used for estimating the longitudinal direction of the parking area; and a setting unit configured to set a parking-slot-exit target position of the vehicle on the basis of the passage angle.

According to the configuration described above, the passage angle is estimated using the information acquired before the vehicle is parked in the parking area, and the parking-slot-exit target position is set on the basis of the passage angle. As a result, an appropriate parking-slot-exit target position according to the passage angle can be set, and highly accurate parking-slot-exit assist can be realized.

In addition, vehicle front information may include a pre-parking vehicle direction indicating an orientation of the vehicle at a start of the parking operation, and the estimation unit may estimate the passage angle on the basis of a vehicle angle that is an angle formed by the pre-parking vehicle direction and the post-parking vehicle direction.

As a result, the passage angle can be accurately estimated by effectively using information acquired before the vehicle is parked in the parking area.

Further, the pre-parking vehicle direction may be an orientation of the vehicle at a start of automatic driving by a parking assist process for assisting the parking operation.

As a result, the passage angle can be estimated using information acquired or generated in the parking assist process performed when the vehicle is parked in the parking area.

In addition, the parking assist process may be a process of starting automatic driving for moving the vehicle from the passage to the parking area, when the vehicle is stopped in parallel with the passage.

As a result, the passage angle can be estimated using the direction of the vehicle at the start of the automatic driving by the parking assist process as it is.

Further, when an error between a predetermined reference angle and the vehicle angle is less than or equal to a threshold value, the estimation unit may estimate that the passage angle is the reference angle.

As a result, it is possible to estimate a general passage angle by absorbing an error of the vehicle angle.

Further, the pre-parking information may include a connection line direction indicating an extending direction of a connection line passing through an end portion of each of a plurality of section lines partitioning the parking area, and the estimation unit may estimate the passage angle on the basis of a connection line angle which is an angle formed by the connection line direction and the post-parking vehicle direction.

As a result, the passage angle can be accurately estimated by effectively using information acquired before the vehicle is parked in the parking area.

Furthermore, the connection line direction may be estimated on the basis of a captured image acquired by an imaging device mounted on the vehicle, before the parking operation is started.

As a result, the passage angle can be estimated using a captured image acquired when the vehicle travels near the parking area. In addition, since such a captured image is information that can be acquired even when the parking assist process is not performed, it is possible to estimate the passage angle regardless of whether or not the parking assist process is performed.

Further, the connection line preferably passes through three or more end portions.

As a result, accuracy in the connection line direction can be improved, and thus the accuracy of the passage angle can be improved.

Further, when an error between a predetermined reference angle and the connection line angle is less than or equal to a threshold value, the estimation unit may estimate that the passage angle is the reference angle.

As a result, it is possible to estimate a general passage angle by absorbing an error of the connection line angle.

Further, the parking-slot-exit assist system may further include a traveling control unit configured to generate a moving path of the vehicle on the basis of a parking-slot-exit target position, after the setting unit sets the parking-slot-exit target position.

As a result, it is possible to generate an appropriate moving path in consideration of the passage angle, as compared with a case of setting the parking-slot-exit target position after generating the moving path.

### BRIEF DESCRIPTION OF DRAWINGS

FIG. 1 is a plan view illustrating an example of a configuration of a vehicle according to a first embodiment.
FIG. 2 is a block diagram illustrating an example of a hardware configuration of a vehicle control system according to the first embodiment.
FIG. 3 is a block diagram illustrating an example of a functional configuration of the vehicle control system according to the first embodiment.
FIG. 4 is a view illustrating an example of a parking-slot-exit operation in a right-angled side-by-side parking lot according to the first embodiment.
FIG. 5 is a view illustrating an example of the parking-slot-exit operation in an angular side-by-side parking lot according to the first embodiment.
FIG. 6 is a view illustrating an example of estimation processing of a passage angle in a right-angled side-by-side parking lot in the first embodiment.
FIG. 7 is a view illustrating an example of estimation processing of a passage angle in an angular side-by-side parking lot in the first embodiment.
FIG. 8 is a flowchart illustrating an example of a process at a time of setting a parking-slot-exit target position in the first embodiment.
FIG. 9 is a view illustrating an example of estimation processing of a passage angle in a right-angled side-by-side parking lot in a second embodiment.
FIG. 10 is a view illustrating an example of estimation processing of a passage angle in an angular side-by-side parking lot in the second embodiment.
FIG. 11 is a flowchart illustrating an example of a process at a time of setting a parking-slot-exit target position in the second embodiment.

### DESCRIPTION OF EMBODIMENTS

Hereinafter, exemplary embodiments of the present invention will be disclosed. The configurations of the embodiments shown below, as well as the actions, results, and effects produced by such configurations, are examples. The present invention can be realized by configurations other than those disclosed in the following embodiments, and at least one of various effects based on the basic configuration and derivative effects can be obtained.

### (First embodiment)

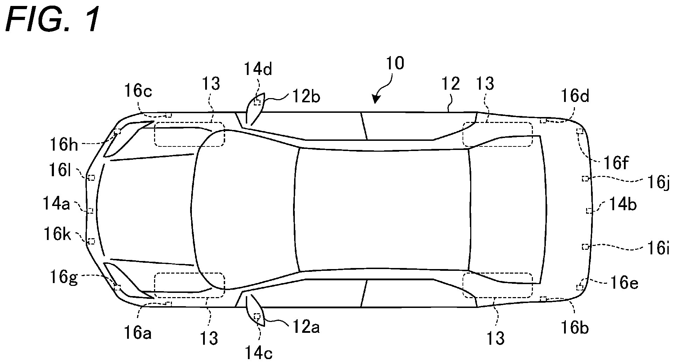

FIG. 1 is a plan view illustrating an example of a configuration of a vehicle 10 according to a first embodiment. The vehicle 10 is an example of a mobile object on which a parking-slot-exit assist system according to the present embodiment is mounted. The vehicle 10 may be, for example, an automobile (an internal combustion engine automobile) using an internal combustion engine as a drive source, may be an automobile (an electric vehicle, a fuel cell vehicle, or the like) using an electric motor as a drive source, or may be an automobile (hybrid automobile) using both of them as a driving source. The vehicle 10 can be mounted with various devices (systems, components, and the like) necessary for driving the internal combustion engine and the electric motor. A type, the number, a layout, and the like of devices related to driving of a wheel 13 in the vehicle 10 can be appropriately set.

The vehicle 10 according to the present embodiment includes a vehicle body 12, the wheel 13, a plurality of (four in the present embodiment) imaging devices 14a, 14b, 14c, and 14d, and a plurality of (12 in the present embodiment) ultrasonic sensors 16a, 16b, 16c, 16d, 16e, 16f, 16g, 16h, 16i, 16j, 16k, and 161. Hereinafter, the imaging devices 14a, 14b, 14c, and 14d will be referred to as imaging devices 14 when it is not necessary to distinguish from each other. The ultrasonic sensors 16a, 16b, 16c, 16d, 16e, 16f, 16g, 16h, 16i, 16j, 16k, and 161 are referred to as ultrasonic sensors 16 when it is not necessary to distinguish from each other. The imaging device 14 and the ultrasonic sensor 16 are examples of in-vehicle sensors mounted on the vehicle 10.

The vehicle body 12 constitutes a vehicle compartment in which an occupant rides. The vehicle body 12 accommodates or holds the wheel 13, the imaging devices 14, the ultrasonic sensors 16, and the like.

The imaging device 14 is, for example, a digital camera incorporating an imaging element such as a charge coupled device (CCD) or a CMOS image sensor (CIS). The imaging device 14 outputs, as imaging data, data of a still image or a moving image including a plurality of frame images generated at a predetermined frame rate. Each of the imaging devices 14 has a wide-angle lens or a fisheye lens, and can capture an image of, for example, a range of 140° to 190° in a horizontal direction. An optical axis of the imaging device 14 is set to be obliquely downward. Therefore, the imaging device 14 outputs image data of a captured image obtained by imaging a periphery of the vehicle 10 including a peripheral road surface.

The imaging device 14 is provided on an outer peripheral portion of the vehicle body 12. For example, the imaging device 14a is provided at a central portion (for example, a front grill) of a front end portion of the vehicle body 12 in a left-right direction. The imaging device 14a generates a captured image obtained by imaging surroundings in front of the vehicle 10. The imaging device 14b is provided at a central portion (for example, around a back door switch) in a left-right direction of a rear end portion of the vehicle body 12. The imaging device 14b generates a captured image obtained by imaging surroundings behind the vehicle 10. The imaging device 14c is provided at a central portion (for example, a left side mirror 12a) in a front-rear direction of a left end portion of the vehicle body 12. The imaging device 14c generates a captured image obtained by imaging surroundings on a left side from the vehicle 10. The imaging device 14d is provided at a central portion (for example, a right side mirror 12b) in a front-rear direction of a right end portion of the vehicle body 12. The imaging device 14d generates a captured image obtained by imaging surroundings on a right side from the vehicle 10.

The ultrasonic sensor 16 is an example of a distance measuring sensor that measures a distance from the vehicle 10 to an obstacle. The ultrasonic sensor 16 is, for example, a sensor that is provided on an outer peripheral portion of the vehicle 10, transmits an ultrasonic wave as a detection wave, and receives a reflected wave reflected by an object present around the vehicle 10. The ultrasonic sensor 16 acquires distance information indicating a distance from the vehicle 10 to an obstacle present around the vehicle 10. For example, the ultrasonic sensor 16 acquires time (time of flight (TOF)) from transmission of the detection wave to reception of the reflected wave, as distance information for specifying the presence or absence, a distance, a position, movement, and the like of the object.

The ultrasonic sensors 16a, 16b, 16c, and 16d are also called side sonars, and are provided on the left and right side portions of the vehicle 10. The ultrasonic sensors 16e and 16f are also called corner sonars, and are provided at a rear portion of the vehicle 10 (for example, a corner portion of the vehicle 10) with respect to the ultrasonic sensors 16a, 16b, 16c, and 16d, and directed rearward (for example, toward a rear outer side) with respect to the ultrasonic sensors 16a, 16b, 16c, and 16d. The ultrasonic sensors 16g and 16h are also called corner sonars, and are provided at a front portion of the vehicle 10 (for example, a corner portion of the vehicle 10) with respect to the ultrasonic sensors 16a, 16b, 16c, and 16d, and directed forward (for example, toward a front outer side) with respect to the ultrasonic sensors 16a, 16b, 16c, and 16d. The ultrasonic sensors 16i and 16j are also called rear sonars, and are provided at a rear end portion of the vehicle 10. The ultrasonic sensors 16k and 16l are also called front sonars, and are provided at a front end portion of the vehicle 10.

The ultrasonic sensors 16a, 16b, 16c, and 16d acquire distance information regarding an object present on a side surface portion of the vehicle 10. The ultrasonic sensors 16g, 16k, 16i, and 16h acquire distance information regarding an object present on a front side from the vehicle 10. The ultrasonic sensors 1616e, 16i, 16j, and 16f acquire distance information regarding an object present on a rear side from the vehicle 10.

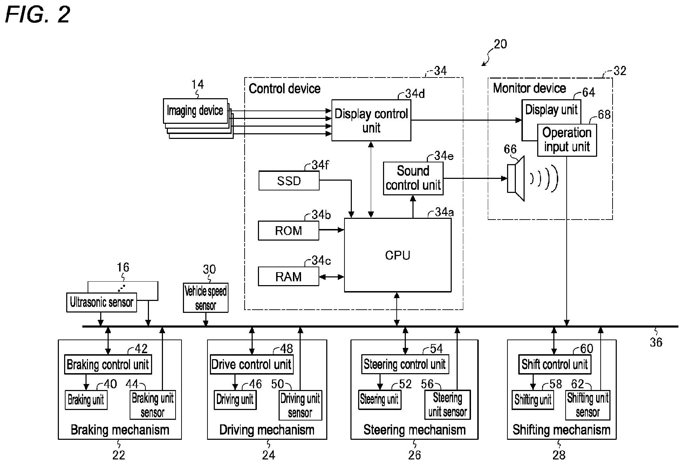

FIG. 2 is a block diagram illustrating an example of a hardware configuration of a vehicle control system 20 according to the first embodiment. The vehicle control system 20 is mounted on the vehicle 10, and controls traveling of the vehicle 10, in-vehicle equipment, and the like.

The vehicle control system 20 according to the present embodiment includes the imaging device 14, the ultrasonic sensor 16, a braking mechanism 22, a driving mechanism 24, a steering mechanism 26, a shifting mechanism 28, a vehicle speed sensor 30, a monitor device 32, a control device 34, and an in-vehicle network 36.

The braking mechanism 22 is a mechanism that decelerates the vehicle 10. The braking mechanism 22 includes a braking unit 40, a braking control unit 42, and a braking unit sensor 44. The braking unit 40 includes, for example, a brake disc, a brake pad, a brake pedal, a link mechanism, and the like, and generates a force for decelerating the vehicle 10. The braking control unit 42 is, for example, an electronic control unit including a central processing unit (CPU) and the like, and controls the braking unit 40 on the basis of an instruction signal from the control device 34. The braking unit sensor 44 is, for example, a position sensor or the like, detects a position of the brake pedal or the like, and outputs a detection result to the control device 34 via the in-vehicle network 36.

The driving mechanism 24 is a mechanism that drives (accelerates) the vehicle 10. The driving mechanism 24 includes a driving unit 46, a drive control unit 48, and a driving unit sensor 50. The driving unit 46 includes, for example, an internal combustion engine, an electric motor, an accelerator pedal, a link mechanism, and the like, and generates a force for accelerating the vehicle 10. The drive control unit 48 is, for example, an electronic control unit including a CPU and the like, and controls the driving unit 46 on the basis of an instruction signal from the control device 34. The driving unit sensor 50 is, for example, a position sensor or the like, detects a position of the accelerator pedal or the like, and outputs a detection result to the control device 34 via the in-vehicle network 36.

The steering mechanism 26 is a mechanism that changes a traveling direction of the vehicle 10. The steering mechanism 26 includes a steering unit 52, a steering control unit 54, and a steering unit sensor 56. The steering unit 52 includes, for example, a steering wheel, a power steering device, a steering assist motor, a link mechanism, and the like, and changes a steered wheel (a traveling direction) of the vehicle 10. The steering control unit 54 is, for example, an electronic control unit including a CPU and the like, and controls the steering unit 52 on the basis of an instruction signal from the control device 34. The steering unit sensor 56 is, for example, an angle sensor including a Hall element and the like, detects a rotation angle or the like of the steering wheel, and outputs a detection result to the control device 34 via the in-vehicle network 36.

The shifting mechanism 28 is a mechanism that changes output torque and a rotation direction of the driving unit 46 (the internal combustion engine, the electric motor, and the like) and transmits the output torque and rotation direction to the wheel 13. The shifting mechanism 28 includes a shifting unit 58, a shift control unit 60, and a shifting unit sensor 62. The shifting unit 58 includes, for example, an automatic transmission device, a shift lever, a link mechanism, and the like, and changes a shift ratio and a rotation direction of the wheel 13. The shift control unit 60 is, for example, an electronic control unit including a CPU and the like, and controls the shifting unit 58 on the basis of an instruction signal from the control device 34. The shifting unit sensor 62 is, for example, a position sensor or the like, detects a position of the shift lever or the like, and outputs a detection result to the control device 34 via the in-vehicle network 36.

The vehicle speed sensor 30 is configured using, for example, a Hall element and the like provided in the vicinity of the wheel 13, and detects a rotation amount, a rotation speed per unit time, and the like of the wheel 13. On the basis of a detection result of the vehicle speed sensor 30, a speed of the vehicle 10 can be calculated.

The monitor device 32 is installed on an instrument panel, a dashboard, or the like inside the vehicle compartment of the vehicle 10, and includes a display unit 64, a sound output unit 66, and an operation input unit 68. The display unit 64 displays an image on the basis of image data transmitted by the control device 34. The display unit 64 is, for example, a display device such as a liquid crystal display (LCD) or an organic electroluminescent display (OELD). The display unit 64 may display, for example, an image for receiving an operation or the like instructing execution or stop of a parking assist function, a parking-slot-exit assist function, and the like. The sound output unit 66 outputs sound on the basis of sound data transmitted by the control device 34. The sound output unit 66 may output, for example, sound related to the parking assist function, the parking-slot-exit assist function, and the like. The operation input unit 68 is a unit that receives an input from an occupant, and can be configured using, for example, a touch panel, a switch, a microphone, or the like. The operation input unit 68 may be configured to be capable of inputting an instruction from the occupant regarding the parking assist function, the parking-slot-exit assist function, and the like.

The control device 34 is an electronic control unit that executes various types of calculation processing and control processing for realizing various functions of the vehicle 10. The control device 34 includes a CPU 34a, a read only memory (ROM) 34b, a random access memory (RAM) 34c, a display control unit 34d, a sound control unit 34e, and a solid state drive (SSD) 34f.

The CPU 34a executes various types of calculation processing and control processing in accordance with a program stored in the ROM 34b, the SSD 34f, and the like. The ROM 34b stores a program, parameters necessary for executing the program, and the like. The RAM 34c temporarily stores various types of data to be used in the calculation in the CPU 34a, and functions as a work area of the CPU 34a. The SSD 34f is a rewritable large-capacity nonvolatile storage device, and holds image data acquired by the imaging device 14, distance information acquired by the ultrasonic sensor 16, various calculation results acquired by the CPU 34a, and the like. The CPU 34a executes, for example, a process for realizing automatic driving control of the vehicle 10. The automatic driving control according to the present embodiment includes parking assist control for assisting a parking operation of parking the vehicle 10 from a passage to a parking area, and parking-slot-exit assist control for assisting a parking-slot-exit operation of causing the vehicle 10 to exit from the parking area to the passage.

Among the processing in the control device 34, the display control unit 34d mainly executes processing on image data acquired by the imaging device 14, generation processing of display image data to be displayed on the display unit 64, and the like. Among the processing in the control device 34, the sound control unit 34e mainly executes generation processing or the like of sound to be output by the sound output unit 66.

The in-vehicle network 36 includes, for example, a controller area network (CAN), a local interconnect network (LIN), and the like. The in-vehicle network 36 mutually communicably connects the driving mechanism 24, the braking mechanism 22, the steering mechanism 26, the shifting mechanism 28, the ultrasonic sensor 16, the vehicle speed sensor 30, the operation input unit 68 of the monitor device 32, the control device 34, and the like.

Note that the hardware configuration of the vehicle control system 20 is not limited to that described above, and should be appropriately designed in accordance with a form of the vehicle 10 and the like. For example, in FIG. 2, a configuration is exemplified in which one control device 34 executes various processes for realizing various functions of the vehicle 10, but a plurality of control devices may be configured to realize various functions by performing processing in cooperation.

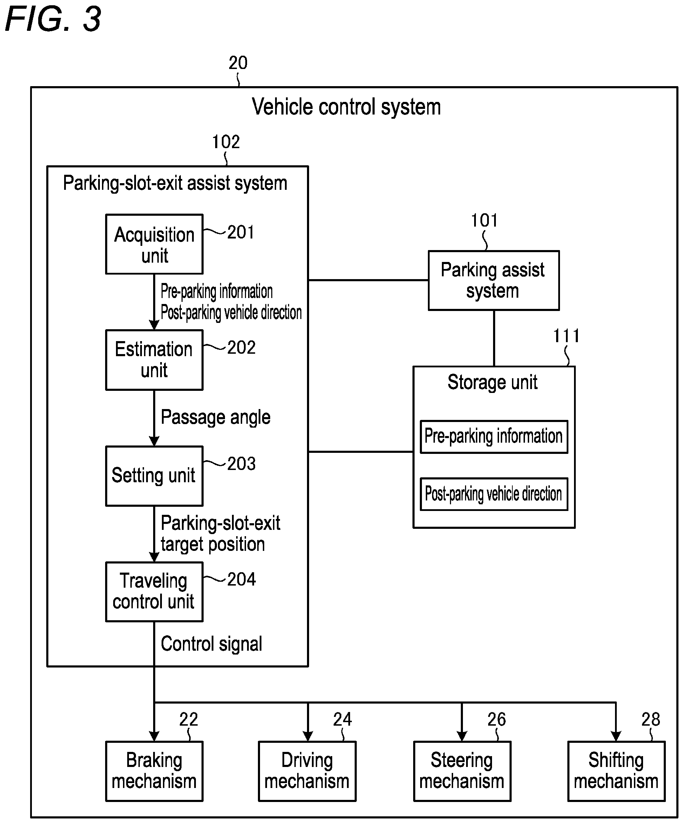

FIG. 3 is a block diagram illustrating an example of a functional configuration of the vehicle control system 20 according to the first embodiment. The vehicle control system 20 according to the present embodiment includes a parking assist system 101, a parking-slot-exit assist system 102, and a storage unit 111. The parking assist system 101, the parking-slot-exit assist system 102, and the storage unit 111 can be configured, for example, by cooperation of pieces of hardware as illustrated in FIG. 2 and software (such as a program for controlling the CPU 34a) for controlling these pieces of hardware.

The parking assist system 101 is a system for assisting a parking operation of parking the vehicle 10 from a passage to a parking area. The parking-slot-exit assist system 102 is a system for assisting a parking-slot-exit operation of causing the vehicle 10 to exit from the parking area to the passage.

The storage unit 111 stores information necessary for a parking-slot-exit assist process performed by the parking-slot-exit assist system 102. The storage unit 111 according to the present embodiment stores pre-parking information acquired before completion of the parking operation and a post-parking vehicle direction indicating an orientation of the vehicle 10 after completion of parking (including at the time of completion). The pre-parking information according to the present embodiment includes a pre-parking vehicle direction indicating an orientation of the vehicle 10 at a start of the parking operation by the parking assist process.

The parking-slot-exit assist system 102 according to the present embodiment includes an acquisition unit 201, an estimation unit 202, a setting unit 203, and a traveling control unit 204.

The acquisition unit 201 acquires the pre-parking information and the post-parking vehicle direction from the storage unit 111 at a start of the parking-slot-exit assist process.

The estimation unit 202 estimates a passage angle indicating an angle formed by a longitudinal direction of the parking area and an extending direction of the passage, on the basis of the pre-parking information and the post-parking vehicle direction. The pre-parking information is information acquired before completion of the parking operation of parking the vehicle 10 from the passage to the parking area and to be used for estimating the extending direction of the passage. The post-parking vehicle direction is information indicating an orientation of the vehicle 10 after completion of parking and to be used for estimating the longitudinal direction of the parking area. The estimation unit 202 according to the present embodiment estimates the passage angle on the basis of the pre-parking vehicle direction as an example of the pre-parking information and the post-parking vehicle direction. Note that the longitudinal direction of the parking area is a direction corresponding to a front-rear direction of the vehicle 10 parked in the parking area.

The setting unit 203 sets a parking-slot-exit target position of the vehicle 10 in the parking-slot-exit assist process, on the basis of the passage angle estimated by the estimation unit 202.

The traveling control unit 204 generates a moving path of the vehicle 10 in the parking-slot-exit assist process on the basis of the parking-slot-exit target position set by the setting unit 203, and outputs a control signal for controlling at least one of the mechanisms 22, 24, 26, and 26 related to traveling such that the vehicle 10 travels along the moving path. That is, after the setting unit 203 sets the parking-slot-exit target position, the traveling control unit 204 of the present embodiment generates the moving path of the vehicle 10 on the basis of the parking-slot-exit target position. As a result, it is possible to generate an appropriate moving path in consideration of the passage angle, as compared with a case of setting the parking-slot-exit target position after generating the moving path.

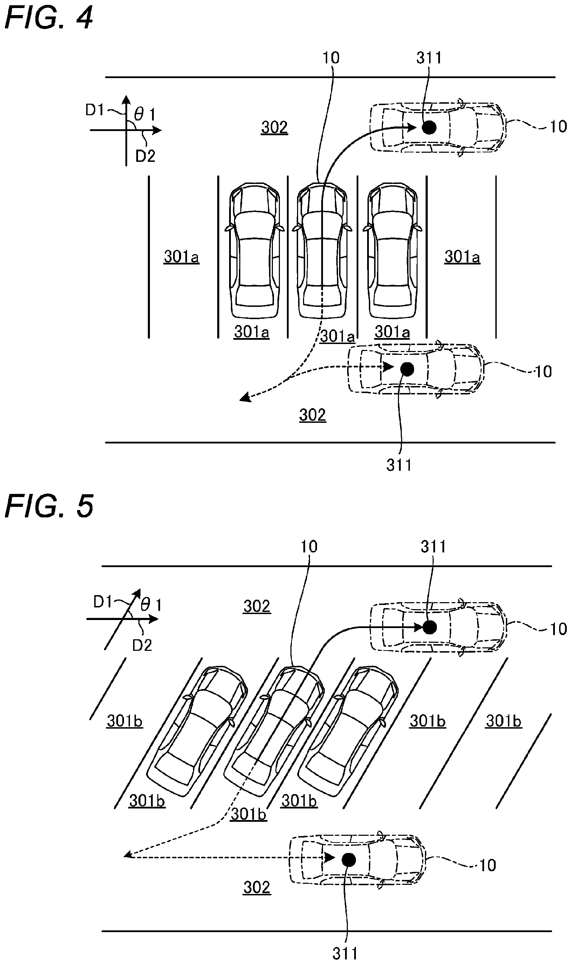

FIG. 4 is a view illustrating an example of the parking-slot-exit operation in a right-angled side-by-side parking lot according to the first embodiment. FIG. 4 illustrates a situation of the right-angled side-by-side parking lot in which a passage angle θ1, which is an angle formed by a longitudinal direction D1 of a plurality of parking areas 301a arranged in parallel to each other and an extending direction D2 of a passage 302 communicating with each parking area 301a, is 90°. The parking-slot-exit operation is an operation of moving the vehicle 10 parked in the parking area 301a to a parking-slot-exit target position 311 set on the passage 302. FIG. 4 illustrates a moving path (a solid arrow) of a forward parking-slot-exit operation in which the vehicle 10 is caused to exit to the passage 302 in front and a moving path (a broken arrow) of a rearward parking-slot-exit operation in which the vehicle 10 is caused to exit to the passage 302 behind.

FIG. 5 is a view illustrating an example of the parking-slot-exit operation in an angular side-by-side parking lot according to the first embodiment. FIG. 5 illustrates a situation of the angular side-by-side parking lot in which a passage angle θ1, which is an angle formed by a longitudinal direction D1 of a plurality of parking areas 301b arranged in parallel to each other and an extending direction D2 of a passage 302 communicating with each parking area 301b, is an angle other than 90° (for example, 45°, 60°, -45°, -60, or the like). Similarly to FIG. 4, FIG. 5 illustrates a moving path (a solid arrow) of the forward parking-slot-exit operation in which the vehicle 10 is caused to exit to the passage 302 in front and a moving path (a broken arrow) of the rearward parking-slot-exit operation in which the vehicle 10 is caused to exit to the passage 302 behind.

Here, if the parking-slot-exit target position 311 is set without consideration of the passage angle θ1, the parking-slot-exit target position 311 may be set to an inappropriate position. For example, if the parking-slot-exit target position 311 in the angular side-by-side parking lot is set similarly to the case of the right-angled side-by-side parking lot, there is a case where a moving path in which the vehicle 10 as a control target may come into contact with an obstacle (for example, another vehicle that is adjacent) is generated. Therefore, the parking-slot-exit assist system 102 according to the present embodiment includes a means to estimate the passage angle θ1 by using information acquired before completion of the parking operation and enable setting of the appropriate parking-slot-exit target position 311.

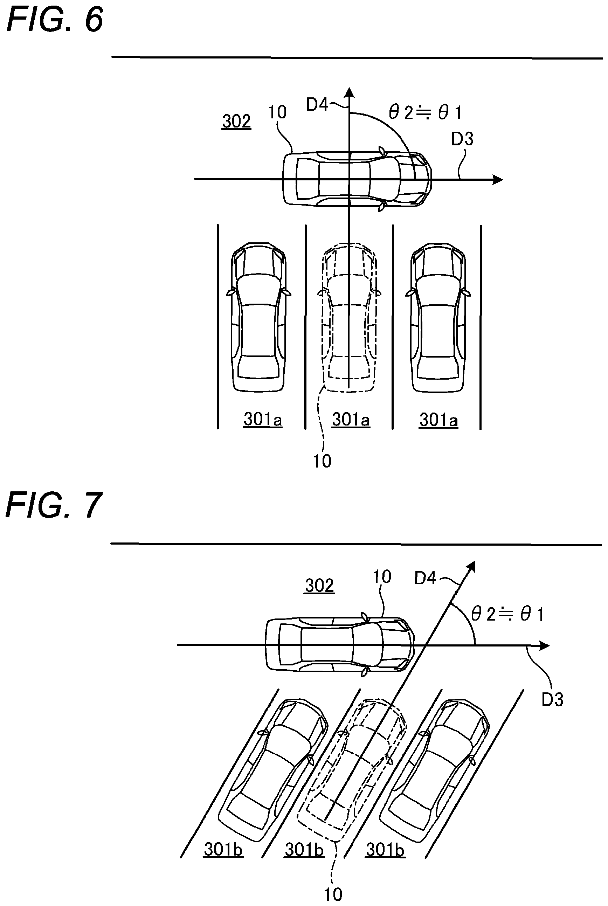

FIG. 6 is a view illustrating an example of estimation processing of the passage angle θ1 in the right-angled side-by-side parking lot in the first embodiment. FIG. 6 illustrates a pre-parking vehicle direction D3 (an example of the pre-parking information) indicating an orientation of the vehicle 10 at a start of the parking operation and a post-parking vehicle direction D4 indicating an orientation of the vehicle 10 after completion of parking. The pre-parking vehicle direction D3 is, for example, an orientation of the vehicle 10 at a start of executing automatic driving (including semi-automatic driving) by the parking assist process, and specifically, may be an orientation or the like of the vehicle 10 at completion of detection of the parking area 301a where the vehicle 10 is to be parked. The post-parking vehicle direction D4 is, for example, an orientation of the vehicle 10 at an end of executing the parking assist process, and specifically, may be an orientation or the like of the vehicle 10 when the shift lever is put into a parking position. A vehicle angle θ2, which is an angle formed by the pre-parking vehicle direction D3 and the post-parking vehicle direction D4, substantially coincides with the passage angle θ1 described above (see FIG. 4). In the right-angled side-by-side parking lot as illustrated in FIG. 6, the vehicle angle θ2 is approximately 90°. In addition, the parking assist process may include a process of starting automatic driving for moving the vehicle 10 from a passage to a parking area when the vehicle 10 is stopped in a state where an orientation of the vehicle 10 is parallel (including a state of being substantially parallel) to an extending direction of the passage.

FIG. 7 is a view illustrating an example of the estimation processing of the passage angle θ1 in an angular side-by-side parking lot in the first embodiment. FIG. 7 illustrates, similarly to FIG. 6, a pre-parking vehicle direction D3, a post-parking vehicle direction D4, and a vehicle angle θ2, and the vehicle angle θ2 substantially coincides with the passage angle θ1 (see FIG. 5). In the angular side-by-side parking lot as illustrated in FIG. 7, the vehicle angle θ2 is an angle other than 90°.

Further, when an error between the vehicle angle θ2 as described above and a predetermined reference angle is less than or equal to a threshold value, the passage angle θ1 may be estimated to be the reference angle. The reference angle may be, for example, 90°, 45°, 60°, -45°, -60°, or the like. Specifically, for example, when the vehicle angle θ2 is 46° and the threshold value is 3°, the passage angle θ1 is estimated to be 45°. This similarly applies to other reference angles. Further, the threshold value is not limited to 3°.

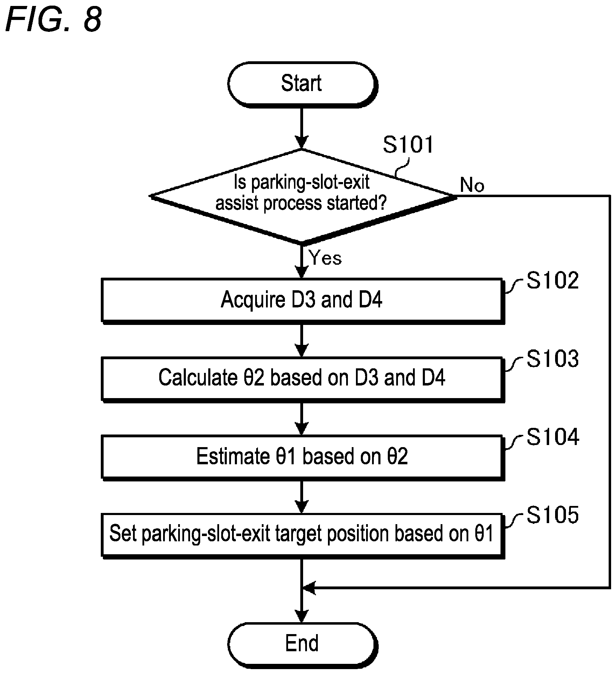

FIG. 8 is a flowchart illustrating an example of a process of setting the parking-slot-exit target position 311 in the first embodiment. First, the acquisition unit 201 determines whether or not the parking-slot-exit assist process has been started (whether or not execution of the parking-slot-exit assist process has been instructed by an occupant) (S101). The acquisition unit 201 ends this routine if the parking-slot-exit assist process has not been started (S101: No), and acquires the pre-parking vehicle direction D3 (an example of the pre-parking information) and the post-parking vehicle direction D4 from the storage unit 111 (S102) if the parking-slot-exit assist process has been started (S101: Yes). Thereafter, the estimation unit 202 calculates the vehicle angle θ2 on the basis of the pre-parking vehicle direction D3 and the post-parking vehicle direction D4 (S103), and estimates the passage angle θ1 on the basis of the vehicle angle θ2 (S104). At this time, the passage angle θ1 may be estimated to be any of a plurality of predetermined reference angles. Thereafter, the setting unit 203 sets the parking-slot-exit target position 311 on the basis of the passage angle θ1 estimated by the estimation unit 202 (S105). The parking-slot-exit target position 311 set as described above is used for, for example, generating a moving path of the vehicle 10 in the parking-slot-exit assist process.

As described above, according to the present embodiment, the passage angle θ1 is estimated on the basis of the pre-parking vehicle direction D3 (an example of the pre-parking information) and the post-parking vehicle direction D4, and the parking-slot-exit target position 311 is set on the basis of the passage angle θ1. As a result, the appropriate parking-slot-exit target position 311 according to the passage angle θ1 can be set, and highly accurate parking-slot-exit assist can be realized.

Hereinafter, another embodiment will be described with reference to the drawings, but the same or similar parts as those of the first embodiment are denoted by the same reference numerals, and the description thereof may be omitted.

### (Second embodiment)

A second embodiment is different from the first embodiment in that a connection line direction (an example of pre-parking information) related to a section line of parking areas 301a and 301b is used instead of the pre-parking vehicle direction D3, when a passage angle θ1 is estimated.

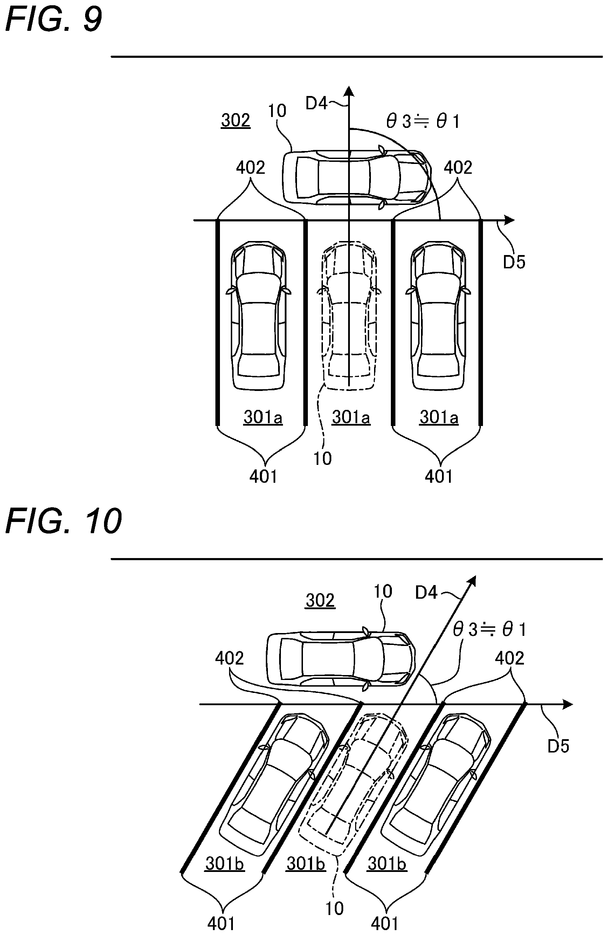

FIG. 9 is a view illustrating an example of estimation processing of the passage angle θ1 in a right-angled side-by-side parking lot in the second embodiment. FIG. 10 is a view illustrating an example of the estimation processing of the passage angle θ1 in an angular side-by-side parking lot in the second embodiment.

FIGS. 9 and 10 illustrate a post-parking vehicle direction D4 and a connection line direction D5. The connection line direction D5 is an extending direction of a connection line passing through an end portion 402 of each of a plurality of section lines 401 defining the parking areas 301a and 301b. The connection line direction D5 can be estimated on the basis of, for example, an image analysis processing result or the like for a captured image acquired by an imaging device 14 before completion of a parking operation of parking a vehicle 10 in the parking areas 301a and 301b. Further, the connection line preferably passes through at least three end portions 402. At this time, among the three or more end portions 402, the end portions 402 whose coordinate values deviate from a predetermined reference value (an average value, a standard deviation, or the like) by a threshold value or more are preferably excluded from those constituting the connection line. As a result, it is possible to reduce a possibility that a line other than the section line 401 is used to determine the connection line direction D5.

A connection line angle θ3, which is an angle formed by the post-parking vehicle direction D4 and the connection line direction D5, substantially coincides with the passage angle θ1. In the right-angled side-by-side parking lot as illustrated in FIG. 9, the connection line angle θ3 is approximately 90°. In the angular side-by-side parking lot as illustrated in FIG. 10, the connection line angle θ3 is an angle other than 90°.

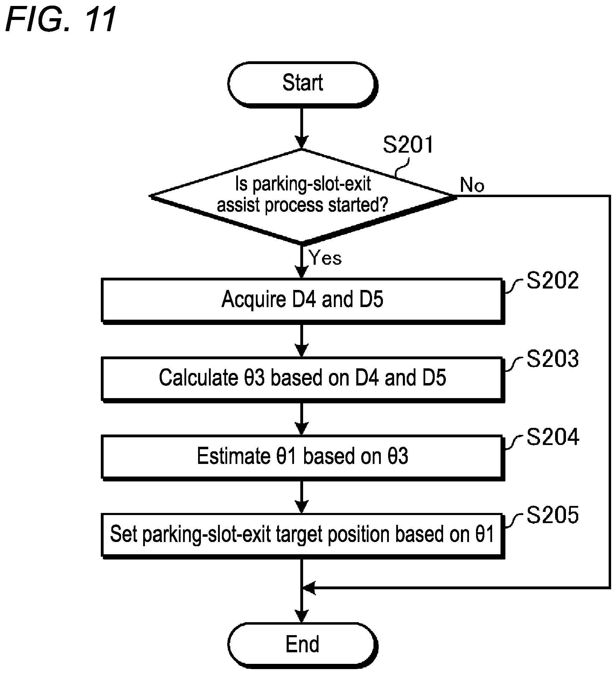

FIG. 11 is a flowchart illustrating an example of a process of setting a parking-slot-exit target position 311 in the second embodiment. First, an acquisition unit 201 determines whether or not a parking-slot-exit assist process has been started (whether or not execution of the parking-slot-exit assist process has been instructed by an occupant) (S201). The acquisition unit 201 ends this routine if the parking-slot-exit assist process has not been started (S201: No), and acquires the post-parking vehicle direction D4 and the connection line direction D5 (an example of the pre-parking information) from a storage unit 111 (S202) if the parking-slot-exit assist process has been started (S201: Yes). Thereafter, an estimation unit 202 calculates the connection line angle θ3 on the basis of the post-parking vehicle direction D4 and the connection line direction D5 (S203), and estimates the passage angle θ1 on the basis of the connection line angle θ3 (S204). At this time, the passage angle θ1 may be estimated to be any of a plurality of predetermined reference angles. Thereafter, the setting unit 203 sets the parking-slot-exit target position 311 on the basis of the passage angle θ1 estimated by the estimation unit 202 (S205). The parking-slot-exit target position 311 set as described above is used for, for example, generating a moving path of the vehicle 10 in the parking-slot-exit assist process.

As described above, according to the present embodiment, the passage angle θ1 is estimated on the basis of the post-parking vehicle direction D4 and the connection line direction D5 (an example of the pre-parking information), and the parking-slot-exit target position 311 is set on the basis of the passage angle θ1. As a result, similarly to the first embodiment, the appropriate parking-slot-exit target position 311 according to the passage angle θ1 can be set, and highly accurate parking-slot-exit assist can be realized. In addition, since the connection line direction D5 is information that can be acquired even when the parking assist is not performed. Therefore, according to the present embodiment, highly accurate parking-slot-exit assist can be realized regardless of whether the parking assist is performed.

A program for causing a computer (the control device 34 or the like) to execute a process for realizing the parking-slot-exit assist as described above may be provided as a computer program product by being stored as a file in an installable format or an executable format, in a computer-readable storage medium such as a CD-ROM, a CD-R, a memory card, a digital versatile disk (DVD), or a flexible disk (FD). In addition, the program may be provided by being stored on a computer connected to a network such as the Internet and downloaded via the network. Furthermore, the program may be provided or distributed via a network such as the Internet.

Although the embodiments of the present invention have been described above, the embodiments described above have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

### REFERENCE SIGNS LIST

10: Vehicle, 12: Vehicle body, 13: Wheel, 14 (14a to 14d): Imaging device, 16 (16a to 16l): Ultrasonic sensor, 20: Vehicle control system, 22: Braking mechanism, 24: Driving mechanism, 26: Steering mechanism, 28: Shifting mechanism, 30: Vehicle speed sensor, 32: Monitor device, 34: Control device, 101: Parking assist system, 102: Parking-slot-exit assist system, 111: Storage unit, 201: Acquisition unit, 202: Estimation unit, 203: Setting unit, 204: Traveling control unit, 301a 301b: Parking area, 302: Passage, 311: Parking-slot-exit target position, 401: Section line, 402: End portion, D1: Longitudinal direction of parking area, D2: Extending direction of passage, D3: Pre-parking vehicle direction, D4: Post-parking vehicle direction, D5: Connection line direction, θ1: Passage angle, θ2: Vehicle angle, and θ3: Connection line angle

## Claims

1. A parking-slot-exit assist system that assists a parking-slot-exit operation of causing a vehicle to exit a parking area to a passage,
the parking-slot-exit assist system comprising:
an estimation unit configured to estimate an passage angle indicating an angle formed by a longitudinal direction of the parking area and an extending direction of the passage, based on pre-parking information that is acquired before completion of a parking operation of causing the vehicle to park from the passage to the parking area and is used for estimating the extending direction of the passage, and based on a post-parking vehicle direction that indicates an orientation of the vehicle after completion of parking and is used for estimating the longitudinal direction of the parking area; and
a setting unit configured to set a parking-slot-exit target position of the vehicle based on the passage angle.

2. The parking-slot-exit assist system according to claim 1, wherein
the pre-parking information includes a pre-parking vehicle direction indicating an orientation of the vehicle at a start of the parking operation, and
the estimation unit estimates the passage angle based on a vehicle angle that is an angle formed by the pre-parking vehicle direction and the post-parking vehicle direction.

3. The parking-slot-exit assist system according to claim 2, wherein
the pre-parking vehicle direction is an orientation of the vehicle at a start of automatic driving by a parking assist process for assisting the parking operation.

4. The parking-slot-exit assist system according to claim 3, wherein
the parking assist process includes a process of starting the automatic driving for moving the vehicle from the passage to the parking area, when the vehicle is stopped in a state where an orientation of the vehicle is parallel to the extending direction of the passage.

5. The parking-slot-exit assist system according to any one of claims 2 to 4, wherein
when an error between a predetermined reference angle and the vehicle angle is less than or equal to a threshold value, the estimation unit estimates that the passage angle is the predetermined reference angle.

6. The parking-slot-exit assist system according to claim 1, wherein
the pre-parking information includes a connection line direction indicating an extending direction of a connection line passing through an end portion of each of a plurality of section lines partitioning the parking area, and
the estimation unit estimates the passage angle based on a connection line angle that is an angle formed by the connection line direction and the post-parking vehicle direction.

7. The parking-slot-exit assist system according to claim 6, wherein
the connection line direction is estimated based on a captured image acquired by an imaging device mounted on the vehicle, before the parking operation is started.

8. The parking-slot-exit assist system according to claim 6 or 7, wherein
the connection line passes through three or more of the end portions.

9. The parking-slot-exit assist system according to claim 6 or 7, wherein
when an error between a predetermined reference angle and the connection line angle is less than or equal to a threshold value, the estimation unit estimates that the passage angle is the predetermined reference angle.

10. The parking-slot-exit assist system according to claim 1, further comprising
a traveling control unit configured to generate a moving path of the vehicle based on the parking-slot-exit target position, after the setting unit sets the parking-slot-exit target position.
